# EUROPEAN PATENT APPLICATION

(11) **EP 2 966 896 A2**
(43) Date of publication of application: **13.01.2016**
(21) Application number: 14760089.4
(22) Date of filing: 13.01.2014
(51) Int. Cl.: H04W 28/10

(54) **DATA STREAM TRANSMISSION METHOD AND DEVICE**

(30) Priority: 06.03.2013 CN 201310071508
(71) Applicant: China Academy of Telecommunications Technology, Hai Dian District Beijing 100191 (CN)
(72) Inventor: LIU, Jiamin, Beijing 100191 (CN); LI, Yanhua, Beijing 100191 (CN); LIANG, Jing, Beijing 100191 (CN)
(74) Representative: Nony
(86) International application number: PCT/CN2014/070498
(87) International publication number: WO 2014/134975

(57) **Abstract**

The present invention relates to communications technology. Disclosed are a data flow transmission method and device, the method comprising: when a base station determines that a UE is covered by an access point (AP) satisfying an offloads condition, the base station instructs the UE to transmit all or part of the data flow via a WLAN link; the UE transmits all or part of the data flow via the WLAN link according to the offloads instruction, thus achieving the cooperative transmission between a mobile communication network and the WLAN network, ensuring the capability of the user transmitting data via an optimized network, and improving the quality of data transmission.

## Description

This application claims the benefit of Chinese Patent Application No. 201310071508.6, filed with the State Intellectual Property Office of People's Republic of China on March 6, 2013 and entitled "Data stream transmission method and device", which is hereby incorporated by reference in its entirety.

### Field

The present invention relates to the field of communication technology and particularly to a method and device for transmitting data stream.

### Background

Along with the growing demands of subscribers and the development of communication technologies, the categories of wireless communication technologies and related networks are increasing, e.g., the 2G/3G/4G mobile communication technologies and networks capable of providing wide coverage, Wireless Fidelity (WiFi) technologies and Wireless Local Area Networks (WLANs) capable of providing hotspot coverage, etc., so a large number of scenarios in which different types of communication networks coexist appear, e.g., a scenario in which the 2G/3G/4G networks and the WLAN network coexist.

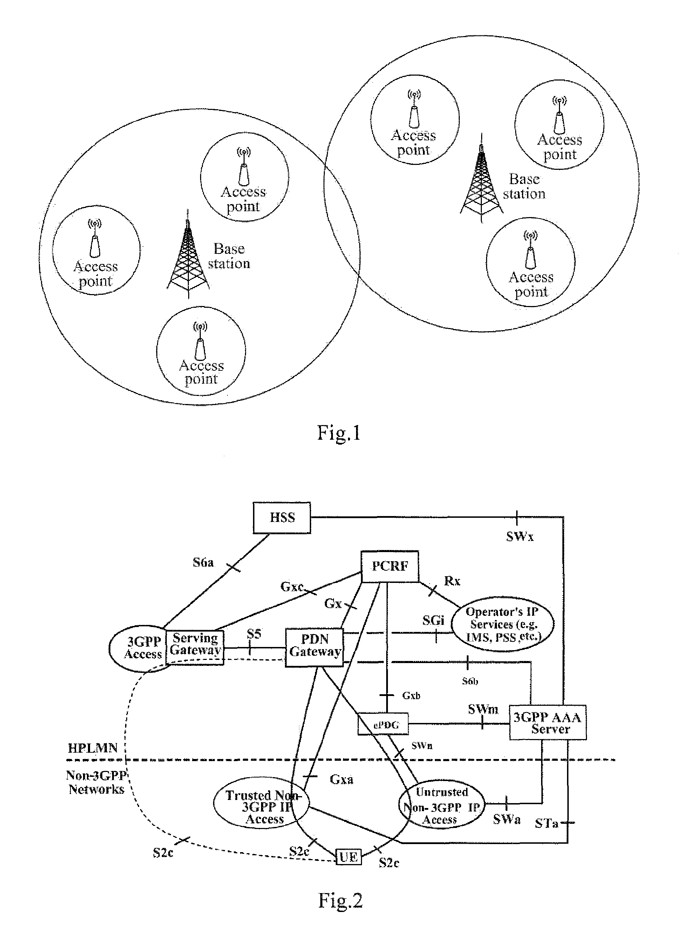

The Evolved Packet System (EPS) is a system which supports various access technologies and mobility between the various access technologies. In the multi-access scenario, the User Equipment (UE) may be covered jointly by a number of 3^{rd} Generation Partnership Project (3GPP) and/or non-3GPP access networks. These access networks may operate with different access technologies, may be served by different operators, and also may provide accesses to different core networks. Fig.1 illustrates the scenario in which a Universal Mobile Telecommunication System (UMTS)/Long Term Evolution (LTE) network coexists with the WLAN network, where there are a number of Access Points (APs) of WLAN in a coverage area of a base station of the UMTS/LTE network, such as a Node B in the UMTS network, an evolved Node B (eNB) in the LTE network. Coverage areas of the access points are smaller than that of the base station.

Fig.2 illustrates a currently supported network architecture in which the UMTS/LTE interoperates with the WLAN, and this network architecture achieves interoperating via an S2c interface between a Packet Data Network (PDN) Gateway and the UE. In the prior art, the UMTS/LTE interoperates with the WLAN generally in a UE-based scheme.

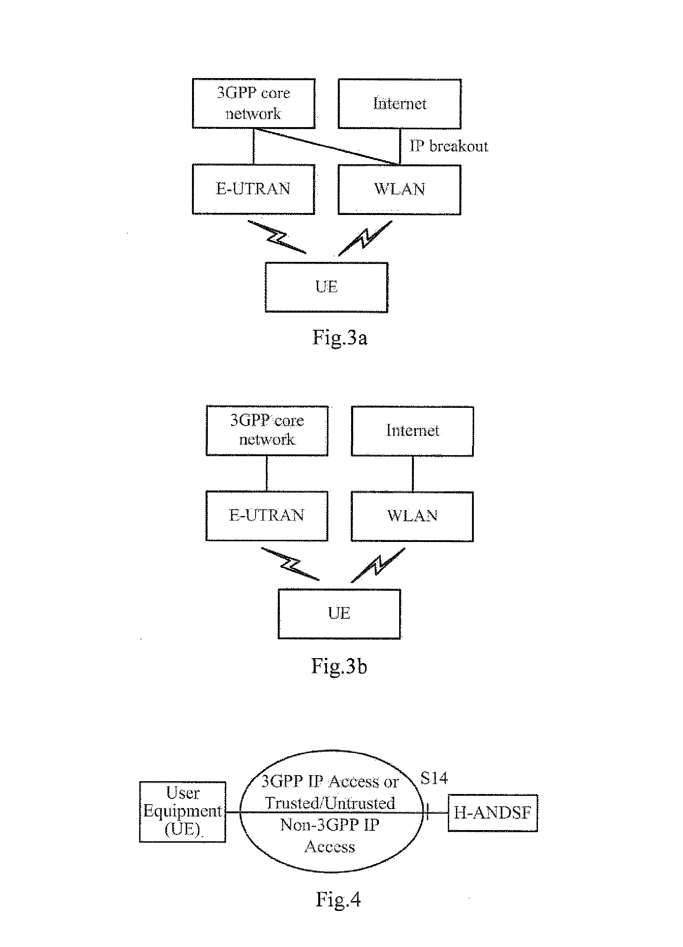

In the existing heterogeneous network scenario, the UMTS/LTE network offloads traffic through the WLAN, where there are generally two scenarios of seamless offloading and non-seamless offloading. As illustrated in Fig.3A, seamless offloading refers to that there is a connection between the WLAN and the 3GPP Core Network (CN), and traffic offloaded via the air interface still accesses the 3GPP (including the UMTS/LTE) core network. As illustrated in Fig.3B, non-seamless offloading refers to that there is no connection between the WLAN and the 3GPP Core Network (CN), and traffic offloaded via the air interface accesses the Internet directly without going through the 3GPP CN.

Offloading through the WLAN may be transferring a part of bearers of the UE, or all the bearers of the UE. If a part of bearers of the UE are transferred, then the UE will be connected with both the UMTS/LTE and the WLAN. If all the bearers of the UE are transferred, then the UE will be connected with only the WLAN after they are transferred.

Further to the network scenarios and architecture above, currently there is a network selection mechanism realized based upon the Access Network Discovery and Selection Function (ANDSF) policy. Particularly, Fig.4 illustrates the architecture of communication between the ANDSF and the UE, where the UE interacts with the ANDSF via an S14 interface, and the S14 interface is an interface based upon the Internet Protocol (IP). The UE communicates with the ANDSF in both a pull mode and a push mode, where the UE pushes a request to the ANDSF on its own initiative in the former mode, and the ANDSF pushes a message on its own initiative in latter mode. The ANDSF policy is relatively static.

Based upon an operator policy, the ANDSF provides the UE with network discovery and selection related information including an Inter-System Mobility Policy (ISMP), Access Network Discovery Information (ANDI), and an Inter-System Routing Policy (ISRP), where:

The ISMP includes a series of rules and preferences defined by operators, and this policy defines whether to allow inter-system mobility, the most appropriate type of access technology to access the Evolved Packet Core (EPC), different priorities of different access technologies, and other information. The ISMP may be preconfigured in the UE or may be transmitted when requested by the UE or may be pushed to the UE by the ANDSF under some trigger. For example the ANDSF may issue a policy with the priority of the WLAN being higher than that of the LTE, so that the WLAN system will be selected preferentially for an access when the UE is covered by both of the LTE and WLAN.

The ANDSF can provide the UE with a list of available access networks, of a requested access type, and related parameters, e.g., access technologies (e.g., WLAN, WiMAX, etc.), radio access network identifiers, carrier frequencies, etc., and the available access networks are proximate to the UE.

The ISRP includes some information required for inter-system routing, and for a UE with multiple radio access interfaces, e.g., a UE supporting IP Flow Mobility (IFOM) or Multi-Access PDN Connectivity (MAPCON), the information can be used to determine: a) over which kind of available access networks to transmit data when a particular routing condition is satisfied; and b) when to prohibit an access to some access network for a particular IP data flow and/or a particular Access Point Name (APN).

As specified in the existing protocol, the ANDSF selects the ISMP, the ANDI and the ISRP to be provided to the UE, as required by the operator and according to a roaming protocol, and the ANDSF can provide all these three policies or can provide only a part of the policies. The ANDSF can interact with some database in the operator network, e.g., a Home Subscriber Server (HSS), etc., to retrieve information as required.

When the UE receives information about an available access network with a higher priority than the priority of the current access network, the UE shall perform a procedure of discovery and reselection to the access network with the higher priority if this is allowed by the user. When the UE selects the access network automatically, the UE can not access the EPC through an access network marked in the ISMP as prohibited.

It can be seen that, at present the UE served respectively by the mobile communication network and the WLAN network can select appropriate one of the networks, and the mobile communication network can not cooperate with the WLAN network, so that it may be difficult to guarantee the quality of data transmission by the UE, when the load of the mobile communication network or the WLAN network is relatively high.

### Summary

Embodiments of the present disclosure provide a method and device for transmitting data stream, so as to improve the quality of data transmission.

A method for transmitting data stream includes:
determining that a User Equipment (UE) is covered by an Access Point (AP) satisfying an offloads condition;
sending an offload instruction to the UE to instruct the UE to transmit all or a part of data stream over a Wireless Local Area Network (WLAN) link; and
transmitting all or a part of the data stream of the UE over the WLAN link, upon determining that the UE receives the offload instruction.

A method for transmitting data stream includes:
receiving, by a User Equipment (UE), an offload instruction, sent by an eNB upon determining that the UE is covered by an Access Point (AP) satisfying an offload condition, to instruct the UE to transmit all or a part of data stream over a Wireless Local Area Network (WLAN) link; and
transmitting, by the UE, all or a part of the data stream over the WLAN link in response to the offload instruction.

A device for transmitting data stream includes:
a determining unit configured to determine that a User Equipment (UE) is covered by an Access Point (AP) satisfying an offload condition;
a sending unit configured to send an offload instruction to the UE to instruct the UE to transmit all or a part of data stream over a Wireless Local Area Network (WLAN) link; and
a transmitting unit configured to transmit all or a part of the data stream of the UE over the WLAN link, upon determining that the UE receives the offload instruction.

A device for transmitting data stream includes:
a receiving unit configured to receive an offload instruction, sent by an eNB upon determining that a User Equipment (UE) is covered by an Access Point (AP) satisfying an offload condition, to instruct the UE to transmit all or a part of data stream over a Wireless Local Area Network (WLAN) link; and
a data transmitting unit configured to transmit all or a part of the data stream over the WLAN link in response to the offload instruction.

The embodiments of the present disclosure provide a method and device for transmitting data stream, where the base station instructs the UE to transmit all or a part of data stream over a WLAN link, upon determining that the UE is covered by an Access Point (AP) satisfying an offload condition, and the UE transmits all or a part of the data stream over the WLAN link in response to the instruction, so that the mobile communication network cooperates with the WLAN network for transmission, to thereby enable the UE to transmit data over better one of the networks so as to improve the quality of data transmission.

### Brief Description of the Drawings

Fig. illustrates a schematic diagram of the scenario in which the UMTS/LTE network coexists with the WLAN network in the prior art;
Fig.2 illustrates a schematic diagram of the network architecture in which the UMTS/LTE network interoperates with the WLAN network in the prior art;
Fig.3a illustrates a schematic diagram of the scenario of seamless offloading in heterogeneous network switching in the prior art;
Fig.3b illustrates a schematic diagram of the scenario of non-seamless offloading in heterogeneous network switching in the prior art;
Fig.4 illustrates a schematic diagram of the architecture of communication between the ANSDF and the UE in the prior art;
Fig.5a illustrates a schematic diagram of an architecture of a UMTS/LTE network and a WLAN network according to an embodiment of the present disclosure;
Fig.5b illustrates a flow chart of a method for transmitting data stream according to an embodiment of the present disclosure;
Fig.6 illustrates a first flow chart of a de-offloading method according to an embodiment of the present disclosure;
Fig.7 illustrates a flow chart of an offload altering method according to an embodiment of the present disclosure;
Fig.8a illustrates a schematic diagram of offloading pattern according to an embodiment of the present disclosure;
Fig.8b illustrates another schematic diagram of offloading pattern according to an embodiment of the present disclosure;
Fig.8c illustrates a schematic diagram of a downlink data protocol in which an LTE base station controls a WiFi link according to an embodiment of the present disclosure;
Fig.9 illustrates another flow chart of a method for transmitting data stream according to an embodiment of the present disclosure;
Fig.10 illustrates a first schematic structural diagram of a device for transmitting data stream according to an embodiment of the present disclosure;
Fig.11 illustrates a second schematic structural diagram of a device for transmitting data stream according to an embodiment of the present disclosure;
Fig.12 illustrates a third schematic structural diagram of a device for transmitting data stream according to an embodiment of the present disclosure; and
Fig.13 illustrates a fourth schematic structural diagram of a device for transmitting data stream according to an embodiment of the present disclosure;

### Detailed Description of the Embodiments

Embodiments of the present disclosure provide a method and device for transmitting data stream, where a base station instructs a UE to transmit all or a part of data stream over a WLAN link, upon determining that the UE is covered by an Access Point (AP) satisfying an offload condition, and the UE transmits all or a part of the data stream over the WLAN link in response to the instruction, so that a mobile communication network cooperate with a WLAN network to transmit, to thereby enable the UE to transmit data over better one of the networks, so as to improve the quality of data transmission.

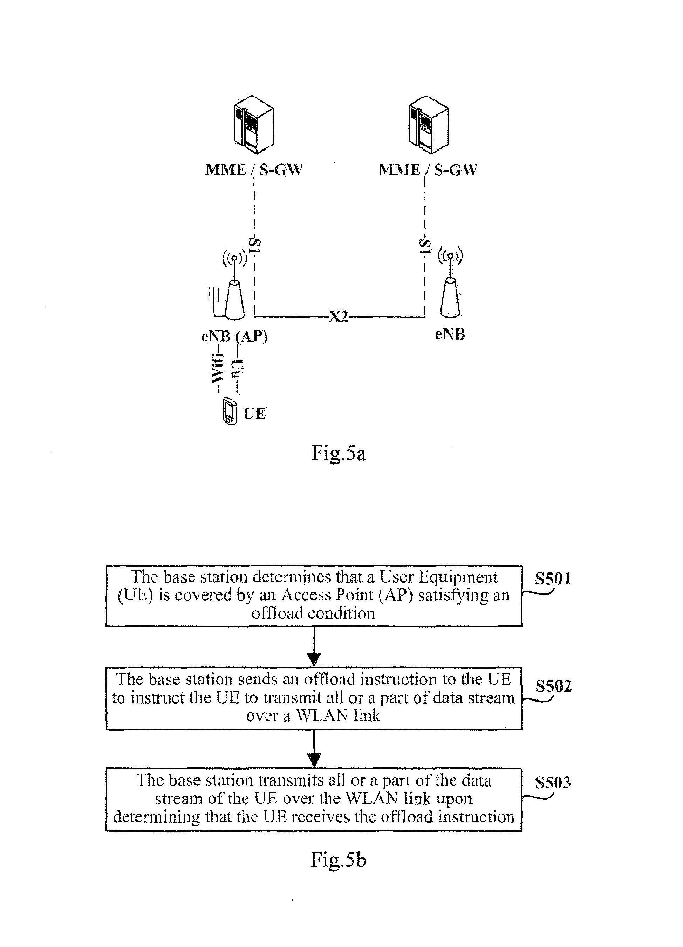

Taking an LTE system and a WLAN system as an example, Fig.5B illustrates a network architecture on which the embodiments of the present disclosure are based, where the entire existing network architecture in the LTE standard is reused as the network architecture, so that an AP is attached to other network element entities than the present eNB, including an MME, an S-GW, an adjacent eNB, etc., all of which do not need to know the presence of the AP, and all of outgoing signaling procedures and data procedures of the present eNB comply with the LTE standard. In the base station to which the AP is attached, the base station can offload a part or all of user plane data of the UE, so that the user data are transmitted over a WLAN link between the AP and the UE. Particularly which services need to be offloaded is determined in an algorithm of the base station according to load conditions of the base station and the AP, respective quality conditions of the two link, transmission requirements of the services, etc.

As illustrated in Fig.5B, an embodiment of the present disclosure provides a method for transmitting data stream, where the method includes:

Operation S501 is to determine that a User Equipment (UE) is covered by an Access Point (AP) satisfying an offload condition;

Operation S502 is to send an offload instruction to the UE to instruct the UE to transmit all or a part of data stream over a WLAN link; and

Operation S503 is to transmit all or a part of the data stream of the UE over the WLAN link, upon determining that the UE receives the offload instruction.

This method may be performed by a base station or another qualified network-side device, although the method will be described in an embodiment of the present disclosure as being performed by a base station.

In the operation S501, the base station may determine that the UE moves into a movement coverage of the A.P, and the load of the AP is relatively low, thus satisfying the offload condition, according to a measurement by the base station, a report of the UE, and other assistance information.

The base station may interact with the UE in a Radio Resource Control (RRC) configuration procedure, and at this time, the base station sends the offload instruction to the UE to instruct the UE to transmit all or a part of the data stream over the WLAN link in the operation S502 particularly as follows:

The base station sends RRC configuration signaling carrying the offload instruction to the UE, to instruct the UE to transmit all or a part of the data stream over the WLAN link.

At this time the base station determines that the UE receives the offload instruction particularly as follows:

The base station receives an RRC configuration complete message sent by the UE, and determines that the UE receives the offload instruction.

The RRC configuration signaling may be newly defined RRC configuration signaling or may simply be RRC reconfiguration signaling, and at this time, the RRC configuration complete message is an RRC reconfiguration complete message.

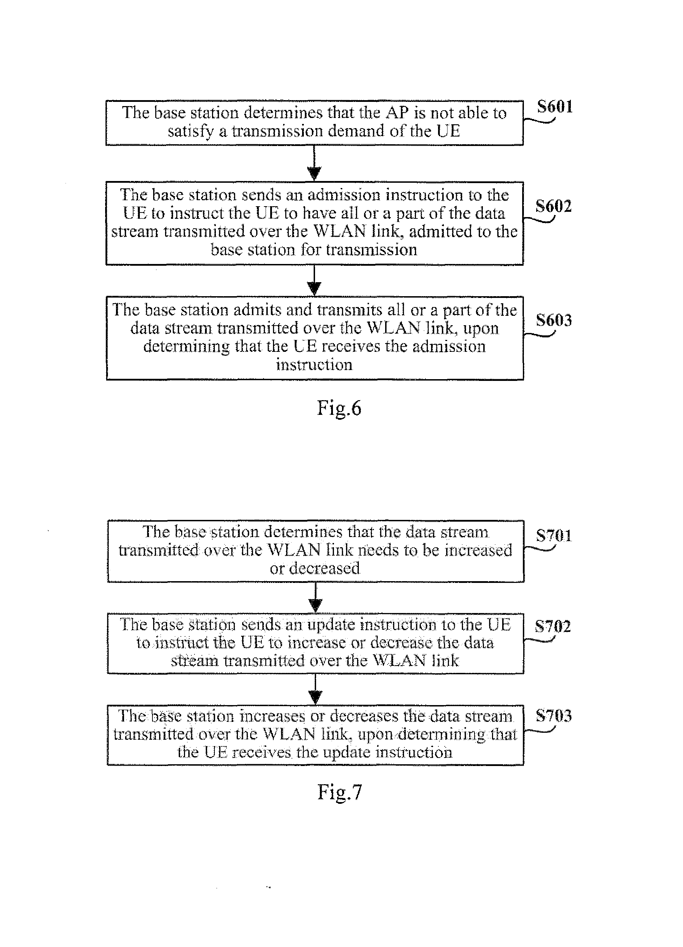

Furthermore the base station may initiate a de-offloading flow upon determining that the AP is not able to satisfy a transmission demand of the UE, and as illustrated in Fig.6, the method further includes:

Operation S601: The base station determines that the AP is not able to satisfy a transmission demand of the UE;

Operation S602: The base station sends an admission instruction to the UE, to instruct the UE to have all or a part of the data stream, transmitted over the WLAN link, admitted to the base station for transmission; and

Operation S603: The base station admits and transmits all or a part of the data stream transmitted over the WLAN link, upon determining that the UE receives the admission instruction.

Particularly in the operation S601, the base station can determines that the UE leaves the coverage area of the AP, or there is such a high load of the AP that all the data stream of the UE may not be transmitted through the AP, according to a measurement of the base station, a report of the UE, and other assistance information.

In the de-offloading flow, similarly the base station may interact with the UE in an RRC configuration procedure, and at this time, the base station sends the admission instruction to the UE, to instruct the UE to transmit all or a part of the data stream transmitted over the WLAN link, through the base station in the operation S602 particularly as follows:

The base station sends RRC configuration signaling carrying the admission instruction to the UE to instruct the UE to transmit all or a part of the data stream transmitted over the WLAN link, through the base station.

Correspondingly the base station determines that the UE receives the admission instruction particularly as follows:

The base station receives a RRC configuration complete message sent by the UE, and determines that the UE receives the admission instruction.

Furthermore the base station may alter the data stream transmitted over the WLAN link, upon determining that there is such a change in the load of the AP that the data stream transmitted over the WLAN link needs to be increased or decreased, and as illustrated in Fig.7, the method further includes:

Operation S701: The base station determines that the data stream transmitted over the WLAN link needs to be increased or decreased;

Operation S702: The base station sends an update instruction to the UE, to instruct the UE to increase or decrease the data stream transmitted over the WLAN link; and

Operation S703: The base station increases or decreases the data stream transmitted over the WLAN link, upon determining that the UE receives the update instruction.

Similarly in the operation S701, the base station may determine the load condition of the AP, according to a measurement of the base station, a report of the UE, and other assistance information.

Similarly, the base station may interact with the UE in an RRC configuration procedure, and at this time, the base station sends the update instruction to the UE, to instruct the UE to increase or decrease the data stream transmitted over the WLAN link particularly as follows:

The base station sends RRC configuration signaling carrying the update instruction to the UE, to instruct the UE to increase or decrease the data stream transmitted over the WLAN link.

Correspondingly, the base station determines that the UE receives the update instruction particularly as follows:

The base station receives an RRC configuration complete message sent by the UE, and determines that the UE receives the update instruction.

Preferably the offload instruction to instruct the UE to transmit all or a part of the data stream over the WLAN link particularly includes:

A list of data stream and/or Dedicated Radio Bearers (DRBs) to be offloaded to the WLAN link for transmission; or

A list of data stream and/or DRBs maintained to be transmitted through the base station; or

A condition to filter data stream and/or DRBs to be offloaded to the WLAN link for transmission; or

A condition to filter data stream and/or DRBs maintained to be transmitted through the base station; or

An instruction to offload all of the data stream to the WLAN link for transmission.

The UE may offload the data, according to the corresponding list or filter condition, upon reception of the offload instruction.

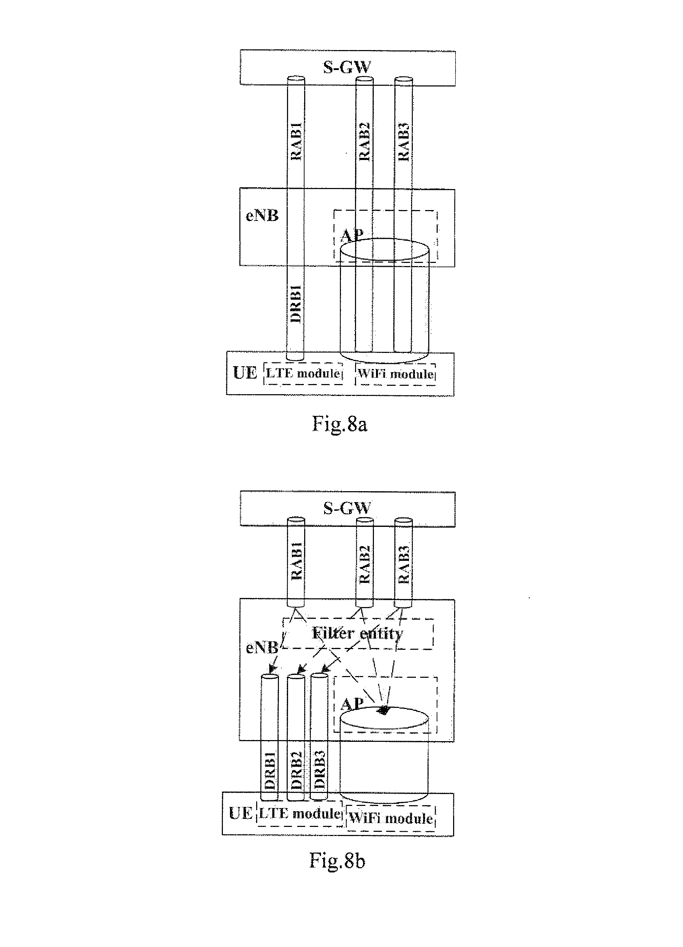

Particularly the data stream may be offloaded based on the granularity of an air interface DRB, where as illustrated in Fig.8A, a part or all of the DRBs are offloaded to the WLAN link for transmission, and if there are remaining DRBs, then they are transmitted via an air interface of the LTE system as usual. In this implementation, there is such a simple offload filter template that DRBs maintained in the LTE system will be transmitted via a Uu interface, and data of DRBs offloaded to the WLAN system will be transmitted over the WLAN link through a WLAN protocol stack, as pre-configured.

Moreover the data stream may be offloaded based on service or other configuration, where as illustrated in Fig.8B, the eNB notifies in advance the UE of the offload filter condition, for example, a filter template rule may be a constraint condition specifying an IP 5-tuple (a destination IP address, a source IP address, a destination port number, a source port number, and a type of protocol), so that if a data packet satisfies the constraint condition and thus complies with the filter rule, then it will be offloaded to the WLAN link for transmission, and the remaining data stream will be transmitted over an LTE link by being mapped as in the LTE standard. In this implementation, the offload filter template may be configured complexly, where in a feasible instance, the offload filter template is preset by using an IP 5-tuple, for example, a data flow with a type of protocol being the TCP will be offloaded to the WLAN link for transmission; or a data flow with an IP address and/or a port number satisfying some condition will be offloaded to the WLAN link for transmission; or a more complex combination of conditions may be preset.

The offload filter template refers to a filter to categorize the data stream, where the data stream of the UE may be categorized by the filter into two categorizes: data stream to be transmitted over the LTE link, and data stream to be transmitted over the WLAN link. For example, the offload filter template in the first implementation may be preset, so that data of a DRB I and a DRB 3 are transmitted over the LTE link, and data of a DRB 2 and a DRB 4 are transmitted over the WLAN link; and in the second implementation, a template may be created for an IP 5-tuple (a destination IP address, a source IP address, a destination port number, a source port number, and a type of protocol) of the data stream of the UE, so that the data stream satisfying the template are transmitted over the WLAN link, and the data stream which do not satisfy the template are transmitted over the LTE link, for example, the IP 5-tuple template may be the type of protocol being the TCP, and then the data stream of the TCP satisfy the template, and the remaining data stream do not satisfy the template; and in a practical application, the filter condition may be more complex and may be preset as a combination of more than one condition in use.

In both of the offloads implementations above, there are still data to be transmitted over the LTE link after the data stream are offloaded, but all of the data stream of the UE may be offloaded to the WLAN link in reality, and at this time, there will be not any data stream of the UE to be carried over the LTE link.

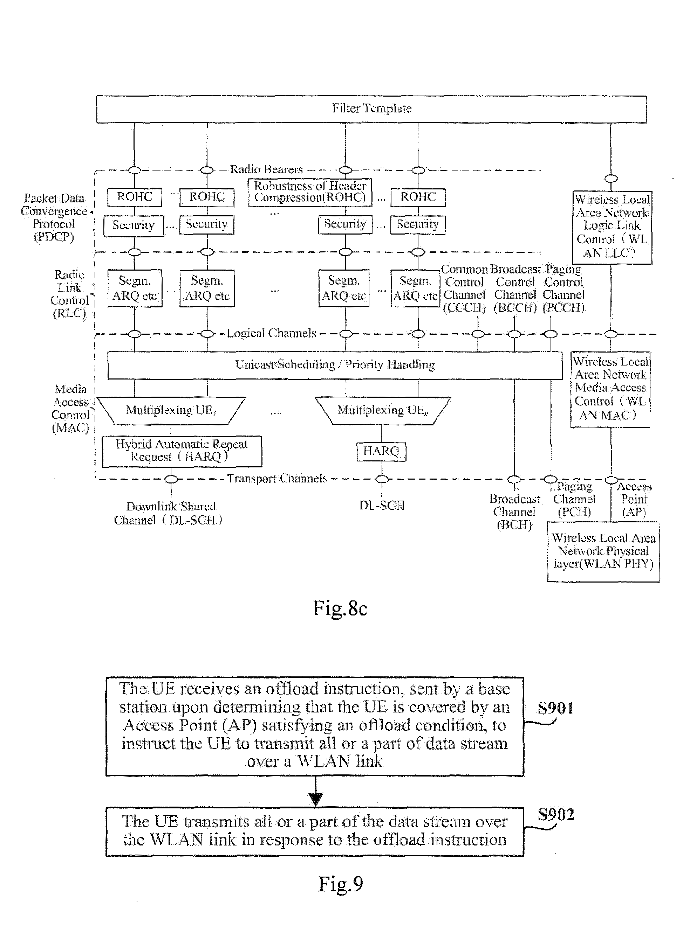

Preferably Fig.8C illustrates a feasible downlink data protocol flow in which the LTE base station controls the WiFi link, but those skilled in the art may perform an alternative protocol flow, although a detailed description thereof will be omitted here.

Furthermore in order to enable the UE to establish the link with the AP, the offload instruction to instruct the UE to transmit all or a part of the data stream over the WLAN link may further include one or more of:

The ID of the AP;

Information about a channel over which the AP operates;

Beacon frame information of the AP;

Security information required for secured communication with the AP; and

Information required for association with the AP.

The UE may establish the communication link with the AP according to the information above, upon reception of the offload instruction, to thereby simplify a signal transmission process.

Preferably the update instruction to instruct the UE to increase or decrease the data stream transmitted over the WLAN link particularly includes:

A list of data stream and/or DRBs to be offloaded to the WLAN link for transmission; or

A list of data stream and/or DRBs maintained to be transmitted through the base station; or

A condition to filter data stream and/or DRBs to be offloaded to the WLAN link for transmission; or

A condition to filter data stream and/or DRBs maintained to be transmitted through the base station; or

An instruction to offloads all of the data stream to the WLAN link for transmission; or

An instruction to admit all of the data stream to the base station for transmission.

The UE offloads the data stream in response to the update instruction upon reception of the update instruction.

The method for transmitting data stream according to an embodiment of the present disclosure will be described below in details in connection with particular embodiments.

### First Embodiment

In this embodiment, a signaling flow in which the base station offloads and de-offloads will be described taking an LTE system and a WLAN system as an example.

At the base station side:

Operation 0: The base station enables the UE to perform general LTE link establishment and data communication procedures;

Operation 1: If the base station detects that the UE moves into a coverage area of the AP, the load of the AP is low, and various offload conditions are satisfied, according to various assistance information, e.g., a measurement of the base station, a report of the UE, etc., then the base station configures the UE, and instructs the UE to offload a part or all of DRBs/data stream to the WLAN link for transmission, in an RRC signaling procedure, where the RRC configuration signaling will carries one of the following:

A list of DRBs to be offloaded to the WLAN link;

A list of DRBs to be maintained in the LTE link;

Information about a filter template for data stream to be offloaded to the WLAN link;

Information about a filter template for data stream to be maintained in the LTE network; and

An instruction to offload all of the data stream to the WLAN link.

In order to enable the UE to access the AP rapidly and to start data transmission rapidly, the RRC configuration signaling may further carry one or more of:

The ID of the AP;

Information about a channel over which the AP operates;

Information about a beacon frame of the AP, e.g., a periodicity, an offset, etc.;

Encryption and other security information required for secured communication with the AP; and

Information required for association with the AP.

Operation 2: If the base station receives an RRC configuration complete message of the UE and determines that the UE is ready to be able to transmit the data stream over the WLAN link according to the specified offload policy, then the AP starts to transmit and receive data of the UE in the downlink and the uplink of the WLAN system, applies the filter template to the downlink data transmitted by a core network, to transmit data stream satisfying the condition over the WLAN link, and to transmit the remaining data stream still over the LTE link, and processes the uplink data of the UE at the base station side, to combine and transmit the data of respective RABs to the core network, under an original RAB mapping rule.

Operation 3: If the base station detects that the UE leaves the coverage area of the AP or there is such a high load of the AP that the demand of the UE for data transmission may not be satisfied, based upon some information, e.g., a measurement at the base station side, a report of the UE, etc., then the base station sends RRC signaling to the UE, and the base station may reuse the RRC configuration signaling, to instruct the UE to have a part or all of the data stream offloaded to the WLAN, admitted to the LTE Uu interface again for transmission; and

Operation 4: If the base station receives an RRC configuration complete message of the UE and determines that the UE is ready to be able to get the offloaded data stream back, then the AP admits again a part or all of the UE data offloaded to the WLAN link, to the LTE link for transmission, according to the previous decision.

At the UE side:

Operation 0: The UE establishes the link and communicates data over the LTE network, and the UE may determine that the UE has moved into the coverage area of the AP based on a measurement of the UE, then the UE will reports a measurement result to the base station;

Operation 1: If the UE receives signaling transmitted by the base station, and offloads all or a part of the data stream of the UE as required, then the UE initiates an access to the specified AP, and needs to perform scan, synchronization, authentication, association and other procedures, to establish a legal and encrypted (optional) communication channel with the AP, where in the authentication, association and other procedures, if the RRC signaling carries related information, then corresponding signaling procedures in the WLAN network may be skipped, but operations will be performed directly according to the RRC signaling; otherwise, the UE will perform traditional related signaling procedures in the WLAN network.

Operation 2: After the UE establishes the link with the AP and is ready for offloading, the UE sends an RRC configuration complete message to the RRC to notify the base station that the UE is ready, where the RRC configuration complete message optionally carries feedback information for security authentication, association and other procedures; and thereafter the UE starts to transmit and receive the data stream satisfying the condition in the uplink and the downlink of the WLAN system.

Operation 3: If the UE receives signaling sent by the base station, and de-offloads all or a part of the data stream of the UE as required, then if there will be not any data stream to be transmitted over the WLAN link as required, then the UE will initiate de-association and other procedures to the WLAN network to terminate the communication link with the AP.

Operation 4: The UE sends an RRC configuration complete message to the base station, to notify the base station that the data stream of the UE have been de-offloaded as required. Thereafter the UE transmits and receives uplink and downlink data under a new mapping rule.

### Second Embodiment

In this embodiment, a signaling flow in which the base station alters the offload filter template will be described taking an LTE system and a WLAN system as an example.

At the base station side:

Operation 0: The base station enables the UE to perform general data communication procedures of LTE link establishment, and LTE link and WLAN link offload filter template maintenance.

Operation 1: If the base station detects such a change in link of the UE or load of the AP/LTE system according to various assistance information, e.g., a measurement of the base station, a report of the UE, etc., that the offload filter template needs to be altered, then the base station configures the UE in an RRC signaling procedure, to notify the UE of a new offload filter template, where the RRC configuration signaling will carries one of the following:

A list of DRBs to be offloaded to the WLAN link;

A list of DRBs to be maintained in the LTE link;

Information about a filter template for data stream to be offloaded to the WLAN link;

Information about a filter template for data stream to be maintained in the LTE network;

An instruction to offload all of the data stream to the WLAN link; or

An instruction to admit all of the data stream to the base station for transmission.

Operation 2: If the base station receives an RRC configuration complete message of the UE and determines that the UE is ready for alteration to be able to transmit the data stream over the WLAN link, according to the altered specified offload policy, then the AP starts to transmit and receive data of the UE in the downlink and the uplink of the WLAN system under the new rule, applies the new filter template to the downlink data transmitted by a core network, to transmit data stream satisfying the condition over the WLAN link and to transmit the remaining data stream still over the LTE link, and processes the uplink data of the UE at the base station side, to combine and transmit the data of respective RABs to the core network under an original RAB mapping rule.

At the UE side:

Operation 0: The UE establishes a link in the LTE network, and maintains data communication modes of offload filter templates of the LTE link and the WLAN link;

Operation 1: If the UE receives signaling transmitted by the base station, and alters the offload filter template as required, then the UE updates the filter templates.

Operation 2: After the UE is ready, the UE sends an RRC configuration complete message to the base station, to notify the base station that the UE is ready for alteration; and thereafter the UE starts to transmit and receive in the uplink and the downlink of the WLAN using the new offload filter template, as configured.

Correspondingly an embodiment of the present disclosure further provides a method for transmitting data stream at the UE side as illustrated in Fig.9, where the method includes:

Operation S901: A User Equipment (UE) receives an offload instruction, sent by a base station upon determining that the UE is covered by an Access Point (AP) satisfying an offload condition, to instruct the UE to transmit all or a part of data stream over a WLAN link; and

Operation S902: The UE transmits all or a part of the data stream over the WLAN link in response to the offload instruction.

The UE receives the offload instruction sent by the base station, to instruct the UE to transmit all or a part of the data stream over the WLAN link particularly as follows:

The UE receives RRC configuration signaling, sent by the base station, carrying the offload instruction, to instruct the UE to transmit all or a part of the data stream over the WLAN link.

The UE transmits all or a part of the data stream over the WLAN link in response to the offload instruction particularly as follows:

The UE establishes a link connection with the AP;

The UE sends an RRC configuration complete message to the base station; and

The UE transmits all or a part of the data stream over the WLAN link in response to the offload instruction.

Furthermore when offloading needs to be performed, the method further includes:

The UE receives an admission instruction, sent by the base station upon determining that the AP may not satisfy a transmission demand of the UE, to instruct the UE to have all or a part of the data stream transmitted over the WLAN link, admitted to the base station for transmission; and

The UE transmits all or a part of the data stream transmitted over the WLAN link, through the base station in response to the admission instruction.

The UE receives the admission instruction sent by the base station to instruct the UE to have all or a part of the data stream transmitted over the WLAN link, admitted to the base station for transmission particularly as follows:

The UE receives RRC configuration signaling, sent by the base station, carrying the admission instruction, to instruct the UE to have all or a part of the data stream transmitted over the WLAN link, admitted to the base station for transmission.

The UE transmits all or a part of the data stream transmitted over the WLAN link, through the base station in response to the admission instruction particularly as follows:

The UE sends an RRC configuration complete message to the base station; and

The UE transmits all or a part of the data stream transmitted over the WLAN link, through the base station in response to the admission instruction.

When the UE transmits all or a part of the data stream transmitted over the WLAN link, through the base station in response to the admission instruction, before the UE sends the RRC configuration complete message to the base station, the method further includes:

The UE terminates the communication link with the AP.

Furthermore when the data stream transmitted over the WLAN link needs to be increased or decreased, the method further includes:

The UE receives an update instruction, send by the base station upon determining that the data stream transmitted over the WLAN link needs to be increased or decreased, to instruct the UE to increase or decrease the data stream transmitted over the WLAN link; and

The UE increases or decreases the data stream transmitted over the WLAN link, in response to the update instruction.

The UE receives the update instruction send by the base station to instruct the UE to increase or decrease the data stream transmitted over the WLAN link particularly as follows:

The UE receives RRC configuration signaling, sent by the base station, carrying the update instruction to instruct the UE to increase or decrease the data stream transmitted over the WLAN link.

The UE increases or decreases the data stream transmitted over the WLAN link, in response to the update instruction particularly as follows:

The UE sends an RRC configuration complete message to the base station; and

The UE increases or decreases the data stream transmitted over the WLAN link, in response to the update instruction.

Particularly he offload instruction to instruct the UE to transmit all or a part of the data stream over the WLAN link particularly includes:

A list of data stream and/or DRBs to be offloaded to the WLAN link for transmission; or

A list of data stream and/or DRBs maintained to be transmitted through the base station; or

A condition to filter data stream and/or DRBs to be offloaded to the WLAN link for transmission; or

A condition to filter data stream and/or DRBs maintained to be transmitted through the base station; or

An instruction to offload all of the data stream to the WLAN link for transmission.

The offload instruction to instruct the UE to transmit all or a part of the data stream over the WLAN link further includes one or more of:

The ID of the AP;

Information about a channel over which the AP operates;

Beacon frame information of the AP;

Security information required for secured communication with the AP; and

Information required for association with the AP.

The update instruction to instruct the UE to increase or decrease the data stream transmitted over the WLAN link particularly includes:

A list of data stream and/or DRBs to be offloaded to the WLAN link for transmission; or

A list of data stream and/or DRBs maintained to be transmitted through the base station; or

A condition to filter data stream and/or DRBs to be offloaded to the WLAN link for transmission; or

A condition to filter data stream and/or DRBs maintained to be transmitted through the base station; or

An instruction to offload all of the data stream to the WLAN link for transmission; or

An instruction to admit all of the data stream to the base station for transmission.

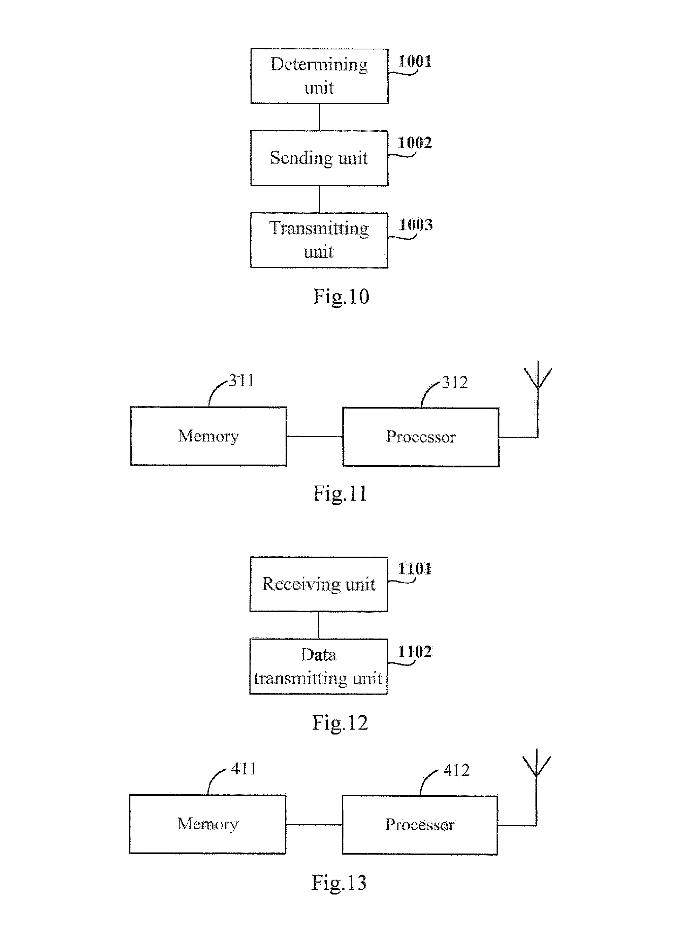

An embodiment of the present disclosure further provides a device for transmitting data stream, which may particularly be a base station, as illustrated in Fig.10, where the device includes:

A determining unit 1001 is configured to determine that a User Equipment (UE) is covered by an Access Point (AP) satisfying an offload condition;

A sending unit 1002 is configured to send an offload instruction to the UE, to instruct the UE to transmit all or a part of data stream over a WLAN link; and

A transmitting unit 1003 is configured to transmit all or a part of the data stream of the UE over the WLAN link, upon determining that the UE receives the offload instruction.

The sending unit 1002 is configured:

to send RRC configuration signaling carrying the offload instruction to the UE, to instruct the UE to transmit all or a part of the data stream over the WLAN link.

The transmitting unit 1003 configured to determine that the UE receives the offload instruction is configured:

to receive an RRC configuration complete message sent by the UE, and to determine that the UE receives the offload instruction.

The determining unit 1001 is further configured:

to determine that the AP may not satisfy a transmission demand of the UE;

The sending unit 1002 is further configured:

to send an admission instruction to the UE to instruct the UE to have all or a part of the data stream transmitted over the WLAN link, admitted to the base station for transmission; and

The transmitting unit 1003 is further configured:

to admit and transmit all or a part of the data stream transmitted over the WLAN link; through the base station upon determining that the UE receives the admission instruction.

The sending unit 1002 configured to send the admission instruction to the UE to instruct the UE to have all or a part of the data stream transmitted over the WLAN link, admitted to the base station for transmission is configured:

to send RRC configuration signaling carrying the admission instruction to the UE to instruct the UE to transmit all or a part of the data stream transmitted over the WLAN link, through the base station.

The transmitting unit 1003 configured to determine that the UE receives the offload instruction is configured:

to receive a RRC configuration complete message sent by the UE, and to determine that the UE receives the admission instruction.

The determining unit 1001 is further configured:

to determine that the data stream transmitted over the WLAN link needs to be increased or decreased;

The sending unit 1002 is further configured:

to send an update instruction to the UE to instruct the UE to increase or decrease the data stream transmitted over the WLAN link; and

The transmitting unit 1003 is further configured:

to increase or decrease the data stream transmitted over the WLAN link, upon determining that the UE receives the update instruction.

The sending unit 1002 configured to send the update instruction to the UE, to instruct the UE to increase or decrease the data stream transmitted over the WLAN link is configured:

to send RRC configuration signaling carrying the update instruction to the UE, to instruct the UE to increase or decrease the data stream transmitted over the WLAN link.

The transmitting unit 1003 configured to determine that the UE receives the update instruction is configured:

to receive an RRC configuration complete message sent by the UE, and to determine that the UE receives the update instruction.

An embodiment of the present disclosure further provides another device for transmitting data stream, which may particularly be a base station, as illustrated in Fig.11, where the device includes a memory 311 and a processor 312, where the memory 311 is configured with computer program codes to perform the method at the base station side according to the embodiment of the present disclosure, and the processor 312 is configured to execute the computer program codes to thereby achieve the advantageous effects to be attained by the present disclosure. Moreover the processor 312 may further include a baseband processing component, a radio frequency component and other devices configured to transmit related information, according to practical requirements. Particularly:

The processor 312 determines that a User Equipment (UE) is covered by an Access Point (AP) satisfying an offload condition;

The processor 312 sends an offload instruction to the UE to instruct the UE to transmit all or a part of data stream over a WLAN link; and

The processor 312 transmits all or a part of the data stream of the UE over the WLAN link upon determining that the UE receives the offload instruction.

The processor 312 sends RRC configuration signaling carrying the offload instruction to the UE to instruct the UE to transmit all or a part of the data stream over the WLAN link.

The processor 312 determines that the UE receives the offload instruction particularly as follows:

The processor 312 receives an RRC configuration complete message sent by the UE, and determines that the UE receives the offload instruction.

The processor 312 is further configured:

to determine that the AP may not satisfy a transmission demand of the UE;

The processor 312 is further configured:

to send an admission instruction to the UE, to instruct the UE to have all or a part of the data stream transmitted over the WLAN link, admitted to the base station for transmission; and

The processor 312 is further configured:

to admit and transmit all or a part of the data stream transmitted over the WLAN link, through the base station, upon determining that the UE receives the admission instruction.

The processor 312 configured to send the admission instruction to the UE, to instruct the UE to have all or a part of the data stream transmitted over the WLAN link, admitted to the base station for transmission is configured:

to send RRC configuration signaling carrying the admission instruction to the UE, to instruct the UE to transmit all or a part of the data stream transmitted over the WLAN link, through the base station.

The processor 312 configured to determine that the UE receives the offload instruction is configured:

to receive a RRC configuration complete message sent by the UE, and to determine that the UE receives the admission instruction.

The processor 312 is further configured:

to determine that the data stream transmitted over the WLAN link needs to be increased or decreased;

The processor 312 is further configured:

to send an update instruction to the UE to instruct the UE to increase or decrease the data stream transmitted over the WLAN link; and

The processor 312 is further configured:

to increase or decrease the data stream transmitted over the WLAN link, upon determining that the UE receives the update instruction.

The processor 312 configured to send the update instruction to the UE to instruct the UE to increase or decrease the data stream transmitted over the WLAN link is configured:

to send RRC configuration signaling carrying the update instruction to the UE to instruct the UE to increase or decrease the data stream transmitted over the WLAN link.

The processor 312 configured to determine that the UE receives the update instruction is configured:

to receive an RRC configuration complete message sent by the UE, and to determine that the UE receives the update instruction.

An embodiment of the present disclosure further provides a device for transmitting data stream, which may particularly be a UE, as illustrated in Fig.12, where the device includes:

A receiving unit 1101 is configured to receive an offload instruction, sent by a base station upon determining that the UE is covered by an Access Point (AP) satisfying an offload condition, to instruct the UE to transmit all or a part of data stream over a WLAN link; and

A data transmitting unit 1102 is configured to transmit all or a part of the data stream over the WLAN link in response to the offload instruction.

The receiving unit 1101 is configured:

to receive RRC configuration signaling, sent by the base station, upon determining that the UE is covered by the AP satisfying the offload condition, carrying the offload instruction to instruct the UE to transmit all or a part of the data stream over the WLAN link.

The data transmitting unit 1102, configured to transmits all or a part of the data stream over the WLAN link in response to the offload instruction, is configured:

to establish a link connection with the AP;

to send an RRC configuration complete message to the base station; and

to transmit all or a part of the data stream over the WLAN link in response to the offload instruction.

The receiving unit 1101 is further configured:

to receive an admission instruction, sent by the base station upon determining that the AP may not satisfy a transmission demand of the UE, to instruct the UE to have all or a part of the data stream transmitted over the WLAN link, admitted to the base station for transmission; and

The data transmitting unit 1102 is further configured:

to transmit all or a part of the data stream transmitted over the WLAN link, through the base station in response to the admission instruction.

The receiving unit 1101 configured to receive the admission instruction sent by the base station to instruct the UE to have all or a part of the data stream transmitted over the WLAN link, admitted to the base station for transmission is configured:

to receive RRC configuration signaling, sent by the base station, carrying the admission instruction to instruct the UE to have all or a part of the data stream transmitted over the WLAN link, admitted to the base station for transmission.

The data transmitting unit 1102 configured to transmit all or a part of the data stream transmitted over the WLAN link, through the base station in response to the admission instruction is configured:

to send an RRC configuration complete message to the base station; and

to transmit all or a part of the data stream transmitted over the WLAN link, through the base station in response to the admission instruction.

When the UE transmits all or a part of the data stream transmitted over the WLAN link, through the base station in response to the admission instruction, before the RRC configuration complete message is sent to the base station, the data transmitting unit 1102 is further configured:

to terminate the communication link with the AP.

Furthermore the receiving unit 1101 is further configured:

to receive an update instruction, send by the base station upon determining that the data stream transmitted over the WLAN link needs to be increased or decreased, to instruct the UE to increase or decrease the data stream transmitted over the WLAN link; and

The data transmitting unit 1102 is further configured:

to increase or decrease the data stream transmitted over the WLAN link, in response to the update instruction.

The receiving unit 1101, configured to receive the update instruction send by the base station to instruct the UE to increase or decrease the data stream transmitted over the WLAN link, is configured:

to receive RRC configuration signaling, sent by the base station, carrying the update instruction to instruct the UE to increase or decrease the data stream transmitted over the WLAN link.

The data transmitting unit 1102, configured to increase or decrease the data stream transmitted over the WLAN link, in response to the update instruction, is configured:

to send an RRC configuration complete message to the base station; and

to increase or decrease the data stream transmitted over the WLAN link, in response to the update instruction.

An embodiment of the present disclosure further provides a device for transmitting data stream, which may particularly be a UE, as illustrated in Fig.13, where the device includes a memory 411 and a processor 412, where the memory 411 is configured with computer program codes to perform the method at the UE side according to the embodiment of the present disclosure, and the processor 412 is configured to execute the computer program codes to thereby achieve the advantageous effects to be attained by the present disclosure. Moreover the processor 412 may further include a baseband processing component, a radio frequency component and other devices configured to transmit related information, according to practical requirements. Particularly:

The processor 412 receives an offload instruction, sent by a base station, upon determining that the UE is covered by an Access Point (AP) satisfying an offload condition, to instruct the UE to transmit all or a part of data stream over a WLAN link; and

The processor 412 transmits all or a part of the data stream over the WLAN link in response to the offload instruction.

The processor 412 receives RRC configuration signaling, sent by the base station, upon determining that the UE is covered by the AP satisfying the offload condition, carrying the offload instruction to instruct the UE to transmit all or a part of the data stream over the WLAN link.

The processor 412 configured to transmit all or a part of the data stream over the WLAN link in response to the offload instruction is configured:

to establish a link connection with the AP;

to send an RRC configuration complete message to the base station; and

to transmit all or a part of the data stream over the WLAN link in response to the offload instruction.

The processor 412 is further configured:

to receive an admission instruction, sent by the base station, upon determining that the AP may not satisfy a transmission demand of the UE, to instruct the UE to have all or a part of the data stream transmitted over the WLAN link, admitted to the base station for transmission; and

The processor 412 is further configured:

to transmit all or a part of the data stream transmitted over the WLAN link, through the base station in response to the admission instruction.

The processor 412, configured to receive the admission instruction sent by the base station, to instruct the UE to have all or a part of the data stream transmitted over the WLAN link, admitted to the base station for transmission, is configured:

to receive RRC configuration signaling, sent by the base station, carrying the admission instruction to instruct the UE to have all or a part of the data stream transmitted over the WLAN link, admitted to the base station for transmission.

The processor 412, configured to transmit all or a part of the data stream transmitted over the WLAN link, through the base station in response to the admission instruction, is configured:

to send an RRC configuration complete message to the base station; and

to transmit all or a part of the data stream transmitted over the WLAN link, through the base station in response to the admission instruction.

When the UE transmits all or a part of the data stream transmitted over the WLAN link, through the base station in response to the admission instruction, before the RRC configuration complete message is sent to the base station, the processor 412 is further configured:

to terminate the communication link with the AP.

Furthermore the processor 412 is further configured:

to receive an update instruction, send by the base station upon determining that the data stream transmitted over the WLAN link needs to be increased or decreased, to instruct the UE to increase or decrease the data stream transmitted over the WLAN link; and

The processor 412 is further configured:

to increase or decrease the data stream transmitted over the WLAN link, in response to the update instruction.

The processor 412 configured to receive the update instruction send by the base station to instruct the UE to increase or decrease the data stream transmitted over the WLAN link is configured:

to receive RRC configuration signaling, sent by the base station, carrying the update instruction to instruct the UE to increase or decrease the data stream transmitted over the WLAN link.

The processor 412 configured to increase or decrease the data stream transmitted over the WLAN link; in response to the update instruction is configured:

to send an RRC configuration complete message to the base station; and

to increase or decrease the data stream transmitted over the WLAN link, in response to the update instruction.

The embodiments of the present disclosure provide a method and device for transmitting data stream, where the base station instructs the UE to transmit all or a part of data stream over a WLAN link, upon determining that the UE is covered by an Access Point (AP) satisfying an offload condition, and the UE transmits all or a part of the data stream over the WLAN link in response to the instruction, so that the mobile communication network cooperates with the WLAN network for transmission, to thereby enable the UE to transmit data over better one of the networks so as to improve the quality of data transmission.

Those skilled in the art shall appreciate that the embodiments of the present disclosure may be embodied as a method, a system or a computer program product. Therefore the present disclosure may be embodied in the form of an all-hardware embodiment, an all-software embodiment or an embodiment of software and hardware in combination. Furthermore the present disclosure may be embodied in the form of a computer program product embodied in one or more computer useable storage mediums (including but not limited to a disk memory, a CD-ROM, an optical memory, etc.) in which computer useable program codes are contained.

The present disclosure has been described in a flow chart and/or a block diagram of the method, the device (system) and the computer program product according to the embodiments of the present disclosure. It shall be appreciated that respective flows and/or blocks in the flow chart and/or the block diagram and combinations of the flows and/or the blocks in the flow chart and/or the block diagram may be embodied in computer program instructions. These computer program instructions may be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions may also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions may also be loaded onto the computer or the other programmable data processing device so that a series of operational operations are performed on the computer or the other programmable data processing device to create a computer implemented process so that the instructions executed on the computer or the other programmable device provide operations for performing the functions specified in the flow(s) of the flow chart and/or the block(s) of the block diagram.

Although the preferred embodiments of the present disclosure have been described, those skilled in the art benefiting from the underlying inventive concept may make additional modifications and variations to these embodiments. Therefore the appended claims are intended to be construed as encompassing the preferred embodiments and all the modifications and variations coming into the scope of the present disclosure.

Evidently those skilled in the art may make various modifications and variations to the present disclosure without departing from the spirit and scope of the present disclosure. Thus the present disclosure is also intended to encompass these modifications and variations thereto so long as the modifications and variations come into the scope of the claims appended to the present disclosure and their equivalents.

## Claims

1. A method for transmitting data stream, comprising:
determining that a User Equipment, UE, is covered by an Access Point, AP, satisfying an offload condition;
sending an offload instruction to the UE to instruct the UE to transmit all or a part of data stream over a Wireless Local Area Network, WLAN, link; and
transmitting all or a part of the data stream of the UE over the WLAN link, upon determining that the UE receives the offload instruction.

2. The method according to claim 1, wherein sending the offload instruction to the UE to instruct the UE to transmit all or a part of the data stream over the WLAN link, comprises:
sending Radio Resource Control, RRC, configuration signaling carrying the offload instruction to the UE, to instruct the UE to transmit all or a part of the data stream over the WLAN link.

3. The method according to claim 2, wherein determining that the UE receives the offload instruction comprises:
receiving an RRC configuration complete message sent by the UE, and determining that the UE receives the offload instruction.

4. The method according to claim 1, further comprising:
determining that the AP is not able to satisfy a transmission demand of the UE;
sending an admission instruction to the UE, to instruct the UE to have all or a part of the data stream transmitted over the WLAN link, admitted to the base station for transmission; and
admitting and transmitting all or a part of the data stream transmitted over the WLAN link, through the base station upon determining that the UE receives the admission instruction.

5. The method according to claim 4, wherein sending, by the base station, the admission instruction to the UE to instruct the UE to have all or a part of the data stream transmitted over the WLAN link, admitted to the base station for transmission comprises:
sending RRC configuration signaling carrying the admission instruction to the UE, to instruct the UE to transmit all or a part of the data stream transmitted over the WLAN link, through the base station.

6. The method according to claim 5, wherein determining that the UE receives the admission instruction comprises:
receiving a RRC configuration complete message sent by the UE, and determining that the UE receives the admission instruction.

7. The method according to claim 1, further comprising:
determining that the data stream transmitted over the WLAN link needs to be increased or decreased;
sending an update instruction to the UE, to instruct the UE to increase or decrease the data stream transmitted over the WLAN link; and
increasing or decreasing the data stream transmitted over the WLAN link, upon determining that the UE receives the update instruction.

8. The method according to claim 7, wherein sending the update instruction to the UE, to instruct the UE to increase or decrease the data stream transmitted over the WLAN link comprises:
sending RRC configuration signaling carrying the update instruction to the UE, to instruct the UE to increase or decrease the data stream transmitted over the WLAN link.

9. The method according to claim 8, wherein determining that the UE receives the update instruction comprises:
receiving an RRC configuration complete message sent by the UE, and determining that the UE receives the update instruction.

10. The method according to claim 1, wherein the offload instruction to instruct the UE to transmit all or a part of the data stream over the WLAN link comprises:
a list of data stream and/or Dedicated Radio Bearers, DRBs, to be offloaded to the WLAN link for transmission; or
a list of data stream and/or DRBs maintained to be transmitted through the base station; or
a condition to filter data stream and/or DRBs to be offloaded to the WLAN link for transmission; or
a condition to filter data stream and/or DRBs maintained to be transmitted through the base station; or
an instruction to offload all of the data stream to the WLAN link for transmission.

11. The method according to claim 1, wherein the offload instruction to instruct the UE to transmit all or a part of the data stream over the WLAN link comprises one or more of:
an ID of the AP;
information about a channel over which the AP operates;
beacon frame information of the AP;
security information required for secured communication with the AP; and
information required for association with the AP.

12. The method according to claim 7, wherein the update instruction to instruct the UE to increase or decrease the data stream transmitted over the WLAN link comprises:
a list of data stream and/or DRBs to be offloaded to the WLAN link for transmission; or
a list of data stream and/or DRBs maintained to be transmitted through the base station; or
a condition to filter data stream and/or DRBs to be offloaded to the WLAN link for transmission; or
a condition to filter data stream and/or DRBs maintained to be transmitted through the base station; or
an instruction to offload all of the data stream to the WLAN link for transmission; or
an instruction to admit all of the data stream to the base station for transmission.

13. A method for transmitting data stream, the method comprising:
receiving, by a User Equipment, UE, an offload instruction, sent by a base station upon determining that the UE is covered by an Access Point, AP, satisfying an offload condition, to instruct the UE to transmit all or a part of data stream over a Wireless Local Area Network, WLAN, link; and
transmitting, by the UE, all or a part of the data stream over the WLAN link in response to the offload instruction.

14. The method according to claim 13, wherein receiving, by the UE, the offload instruction sent by the base station to instruct the UE to transmit all or a part of the data stream over the WLAN link comprises:
receiving, by the UE, Radio Resource Control, RRC, configuration signaling, sent by the base station, carrying the offload instruction to instruct the UE to transmit all or a part of the data stream over the WLAN link.

15. The method according to claim 14, wherein transmitting, by the UE, all or a part of the data stream over the WLAN link in response to the offload instruction comprises:
establishing, by the UE, a link connection with the AP;
sending, by the UE, an RRC configuration complete message to the base station; and
transmitting, by the UE, all or a part of the data stream over the WLAN link in response to the offload instruction.

16. The method according to claim 13, further comprising:
receiving, by the UE, an admission instruction, sent by the base station upon determining that the AP is not able to satisfy a transmission demand of the UE, to instruct the UE to have all or a part of the data stream transmitted over the WLAN link; admitted to the base station for transmission; and
transmitting, by the UE, all or a part of the data stream transmitted over the WLAN link, through the base station in response to the admission instruction.

17. The method according to claim 16, wherein receiving, by the UE, the admission instruction sent by the base station to instruct the UE to have all or a part of the data stream transmitted over the WLAN link, admitted to the base station for transmission comprises:
receiving, by the UE, RRC configuration signaling, sent by the base station, carrying the admission instruction to instruct the UE to have all or a part of the data stream transmitted over the WLAN link, admitted to the base station for transmission.

18. The method according to claim 17, wherein transmitting, by the UE, all or a part of the data stream transmitted over the WLAN link, through the base station in response to the admission instruction comprises:
sending, by the UE, an RRC configuration complete message to the base station; and
transmitting, by the UE, all or a part of the data stream transmitted over the WLAN link, through the base station in response to the admission instruction.

19. The method according to claim 18, wherein when the UE transmits all or a part of the data stream transmitted over the WLAN link, through the base station in response to the admission instruction, before the UE sends the RRC configuration complete message to the base station, the method further comprises:
terminating the communication link with the AP.

20. The method according to claim 13, further comprising:
receiving, by the UE, an update instruction, send by the base station upon determining that the data stream transmitted over the WLAN link needs to be increased or decreased, to instruct the UE to increase or decrease the data stream transmitted over the WLAN link; and
increasing or decreasing, by the UE, the data stream transmitted over the WLAN link; in response to the update instruction.

21. The method according to claim 20, wherein receiving, by the UE, the update instruction send by the base station to instruct the UE to increase or decrease the data stream transmitted over the WLAN link comprises:
receiving, by the UE, RRC configuration signaling, sent by the base station, carrying the update instruction to instruct the UE to increase or decrease the data stream transmitted over the WLAN link.

22. The method according to claim 21, wherein increasing or decreasing, by the UE, the data stream transmitted over the WLAN link, in response to the update instruction comprises:
sending, by the UE, an RRC configuration complete message to the base station; and
increasing or decreasing, by the UE, the data stream transmitted over the WLAN link, in response to the update instruction.

23. The method according to claim 13, wherein the offload instruction to instruct the UE to transmit all or a part of the data stream over the WLAN link comprises:
a list of data stream and/or Dedicated Radio Bearers, DRBs, to be offloaded to the WLAN link for transmission; or
a list of data stream and/or DRBs maintained to be transmitted through the base station; or
a condition to filter data stream and/or DRBs to be offloaded to the WLAN link for transmission; or
a condition to filter data stream and/or DRBs maintained to be transmitted through the base station; or
an instruction to offload all of the data stream to the WLAN link for transmission.

24. The method according to claim 13, wherein the offload instruction to instruct the UE to transmit all or a part of the data stream over the WLAN link comprises one or more of:
an ID of the AP;
information about a channel over which the AP operates;
beacon frame information of the AP;
security information required for secured communication with the AP; and
information required for association with the AP.

25. The method according to claim 20, wherein the update instruction to instruct the UE to increase or decrease the data stream transmitted over the WLAN link comprises:
a list of data stream and/or DRBs to be offloaded to the WLAN link for transmission; or
a list of data stream and/or DRBs maintained to be transmitted through the base station; or
a condition to filter data stream and/or DRBs to be offloaded to the WLAN link for transmission; or
a condition to filter data stream and/or DRBs maintained to be transmitted through the base station; or
an instruction to offload all of the data stream to the WLAN link for transmission; or
an instruction to admit all of the data stream to the base station for transmission.

26. A device for transmitting data stream, the device comprising:
a determining unit configured to determine that a User Equipment, UE, is covered by an Access Point, AP, satisfying an offload condition;
a sending unit configured to send an offload instruction to the UE to instruct the UE to transmit all or a part of data stream over a Wireless Local Area Network, WLAN, link; and
a transmitting unit configured to transmit all or a part of the data stream of the UE over the WLAN link, upon determining that the UE receives the offload instruction.

27. The device according to claim 26, wherein the sending unit is configured:
to send Radio Resource Control, RRC, configuration signaling carrying the offload instruction to the UE, to instruct the UE to transmit all or a part of the data stream over the WLAN link.

28. The device according to claim 27, wherein the transmitting unit configured to determine that the UE receives the offload instruction is configured:
to receive an RRC configuration complete message sent by the UE, and to determine that the UE receives the offload instruction.

29. The device according to claim 26, wherein the determining unit is further configured:
to determine that the AP is not able to satisfy a transmission demand of the UE;
the sending unit is further configured:
to send an admission instruction to the UE to instruct the UE to have all or a part of the data stream transmitted over the WLAN link, admitted to the base station for transmission; and
the transmitting unit is further configured:
to admit and transmit all or a part of the data stream transmitted over the WLAN link, through the base station, upon determining that the UE receives the admission instruction.

30. The device according to claim 29, wherein the sending unit, configured to send the admission instruction to the UE to instruct the UE to have all or a part of the data stream transmitted over the WLAN link, admitted to the base station for transmission, is configured:
to send RRC configuration signaling carrying the admission instruction to the UE, to instruct the UE to transmit all or a part of the data stream transmitted over the WLAN link, through the base station.

31. The device according to claim 30, wherein the transmitting unit configured to determine that the UE receives the offload instruction is configured:
to receive a RRC configuration complete message sent by the UE, and to determine that the UE receives the admission instruction.

32. The device according to claim 26, wherein the determining unit is further configured:
to determine that the data stream transmitted over the WLAN link needs to be increased or decreased;
the sending unit is further configured:
to send an update instruction to the UE to instruct the UE to increase or decrease the data stream transmitted over the WLAN link; and
the transmitting unit is further configured:
to increase or decrease the data stream transmitted over the WLAN link, upon determining that the UE receives the update instruction.

33. The device according to claim 32, wherein the sending unit, configured to send the update instruction to the UE to instruct the UE to increase or decrease the data stream transmitted over the WLAN link, is configured:
to send RRC configuration signaling carrying the update instruction to the UE to instruct the UE to increase or decrease the data stream transmitted over the WLAN link.

34. The device according to claim 33, wherein the transmitting unit, configured to determine that the UE receives the update instruction, is configured:
to receive an RRC configuration complete message sent by the UE, and to determine that the UE receives the update instruction.

35. A device for transmitting data stream, the device comprising:
a receiving unit configured to receive an offload instruction, sent by a base station upon determining that a User Equipment, UE, is covered by an Access Point, AP, satisfying an offload condition, to instruct the UE to transmit all or a part of data stream over a Wireless Local Area Network, WLAN, link; and
a data transmitting unit configured to transmit all or a part of the data stream over the WLAN link in response to the offload instruction.

36. The device according to claim 35, wherein the receiving unit is configured:
to receive RRC configuration signaling, sent by the base station upon determining that the UE is covered by the AP satisfying the offload condition, carrying the offload instruction to instruct the UE to transmit all or a part of the data stream over the WLAN link.

37. The device according to claim 36, wherein the data transmitting unit configured to transmits all or a part of the data stream over the WLAN link in response to the offload instruction is configured:
to establish a link connection with the AP;
to send a Radio Resource Control, RRC, configuration complete message to the base station; and
to transmit all or a part of the data stream over the WLAN link in response to the offload instruction.

38. The device according to claim 35, wherein the receiving unit is further configured:
to receive an admission instruction, sent by the base station, upon determining that the AP is not able to satisfy a transmission demand of the UE, to instruct the UE to have all or a part of the data stream transmitted over the WLAN link, admitted to the base station for transmission; and
the data transmitting unit is further configured:
to transmit all or a part of the data stream transmitted over the WLAN link, through the base station in response to the admission instruction.

39. The device according to claim 38, wherein the receiving unit, configured to receive the admission instruction sent by the base station to instruct the UE to have all or a part of the data stream transmitted over the WLAN link, admitted to the base station for transmission, is configured:
to receive RRC configuration signaling, sent by the base station, carrying the admission instruction to instruct the UE to have all or a part of the data stream transmitted over the WLAN link, admitted to the base station for transmission.

40. The device according to claim 39, wherein the data transmitting unit, configured to transmit all or a part of the data stream transmitted over the WLAN link, through the base station in response to the admission instruction, is configured:
to send an RRC configuration complete message to the base station; and
to transmit all or a part of the data stream transmitted over the WLAN link, through the base station in response to the admission instruction.

41. The device according to claim 40, wherein when the UE transmits all or a part of the data stream transmitted over the WLAN link, through the base station in response to the admission instruction, before the RRC configuration complete message is sent to the base station, the data transmitting unit is further configured:
to terminate the communication link with the AP.

42. The device according to claim 35, wherein the receiving unit is further configured:
to receive an update instruction, send by the base station upon determining that the data stream transmitted over the WLAN link needs to be increased or decreased, to instruct the UE to increase or decrease the data stream transmitted over the WLAN link; and
the data transmitting unit is further configured:
to increase or decrease the data stream transmitted over the WLAN link, in response to the update instruction.

43. The device according to claim 42, wherein the receiving unit, configured to receive the update instruction sent by the base station, to instruct the UE to increase or decrease the data stream transmitted over the WLAN link, is configured:
to receive RRC configuration signaling, sent by the base station, carrying the update instruction to instruct the UE to increase or decrease the data stream transmitted over the WLAN link.

44. The device according to claim 43, wherein the data transmitting unit, configured to increase or decrease the data stream transmitted over the WLAN link, in response to the update instruction, is configured:
to send an RRC configuration complete message to the base station; and
to increase or decrease the data stream transmitted over the WLAN link, in response to the update instruction.

45. A device for transmitting data stream, the device comprising a memory and a processor, wherein the processor is configured to execute computer program to implement:
determining that a User Equipment, UE, is covered by an Access Point, AP, satisfying an offload condition;
sending an offload instruction to the UE to instruct the UE to transmit all or a part of data stream over a Wireless Local Area Network, WLAN, link; and
transmitting all or a part of the data stream of the UE over the WLAN link, upon determining that the UE receives the offload instruction; and
the memory is configured to store the computer program.

46. The device according to claim 45, wherein the processor sends RRC configuration signaling carrying the offload instruction to the UE to instruct the UE to transmit all or a part of the data stream over the WLAN link.

47. The device according to claim 46, wherein the transmitting unit determining that the UE receives the offload instruction comprises:
receiving an RRC configuration complete message sent by the UE, and determining that the UE receives the offload instruction.

48. The device according to claim 45, wherein the processor is further configured:
to determine that the AP is not able to satisfy a transmission demand of the UE;
to send an admission instruction to the UE to instruct the UE to have all or a part of the data stream transmitted over the WLAN link, admitted to the base station for transmission; and
to admit and transmit all or a part of the data stream transmitted over the WLAN link, through the base station upon determining that the UE receives the admission instruction.

49. The device according to claim 48, wherein the processor, configured to send the admission instruction to the UE to instruct the UE to have all or a part of the data stream transmitted over the WLAN link, admitted to the base station for transmission, is configured:
to send RRC configuration signaling carrying the admission instruction to the UE to instruct the UE to transmit all or a part of the data stream transmitted over the WLAN link, through the base station.

50. The device according to claim 49, wherein the processor configured to determine that the UE receives the offload instruction is configured:
to receive a RRC configuration complete message sent by the UE, and to determine that the UE receives the admission instruction.

51. The device according to claim 45, wherein the processor is further configured:
to determine that the data stream transmitted over the WLAN link needs to be increased or decreased;
to send an update instruction to the UE to instruct the UE to increase or decrease the data stream transmitted over the WLAN link; and
to increase or decrease the data stream transmitted over the WLAN link, upon determining that the UE receives the update instruction.

52. The device according to claim 51, wherein the processor configured to send the update instruction to the UE to instruct the UE to increase or decrease the data stream transmitted over the WLAN link is configured:
to send RRC configuration signaling carrying the update instruction to the UE to instruct the UE to increase or decrease the data stream transmitted over the WLAN link.

53. The device according to claim 52, wherein the processor configured to determine that the UE receives the update instruction is configured:
to receive an RRC configuration complete message sent by the UE, and to determine that the UE receives the update instruction.

54. A device for transmitting data stream, the device comprising a memory and a processor, wherein the processor is configured to execute computer program to implement:
receiving an offload instruction, sent by a base station upon determining that the UE is covered by an Access Point, AP, satisfying an offload condition, to instruct the UE to transmit all or a part of data stream over a Wireless Local Area Network, WLAN, link; and
transmitting all or a part of the data stream over the WLAN link in response to the offload instruction; and
the memory is configured to store the computer program.

55. The device according to claim 54, wherein the processor receives RRC configuration signaling, sent by the base station upon determining that the UE is covered by the AP satisfying the offloads condition, carrying the offload instruction to instruct the UE to transmit all or a part of the data stream over the WLAN link.

56. The device according to claim 55, wherein the processor, configured to transmit all or a part of the data stream over the WLAN link in response to the offload instruction, is configured:
to establish a link connection with the AP;
to send a Radio Resource Control, RRC, configuration complete message to the base station;
and
to transmit all or a part of the data stream over the WLAN link in response to the offload instruction.

57. The device according to claim 54, wherein the processor is further configured:
to receive an admission instruction, sent by the base station upon determining that the AP is not able to satisfy a transmission demand of the UE, to instruct the UE to have all or a part of the data stream transmitted over the WLAN link, admitted to the base station for transmission; and
to transmit all or a part of the data stream transmitted over the WLAN link, through the base station in response to the admission instruction.

58. The device according to claim 57, wherein the processor, configured to receive the admission instruction sent by the base station to instruct the UE to have all or a part of the data stream transmitted over the WLAN link, admitted to the eNB for transmission, is configured:
to receive RRC configuration signaling, sent by the base station, carrying the admission instruction to instruct the UE to have all or a part of the data stream transmitted over the WLAN link, admitted to the base station for transmission.

59. The device according to claim 58, wherein the processor, configured to transmit all or a part of the data stream transmitted over the WLAN link, through the base station in response to the admission instruction, is configured:
to send an RRC configuration complete message to the base station; and
to transmit all or a part of the data stream transmitted over the WLAN link, through the base station in response to the admission instruction.

60. The device according to claim 59, wherein when the UE transmits all or a part of the data stream transmitted over the WLAN link, through the base station in response to the admission instruction, before the RRC configuration complete message is sent to the base station, the processor is further configured:
to terminate the communication link with the AP.

61. The device according to claim 54, wherein the processor is further configured:
to receive an update instruction, send by the base station upon determining that the data stream transmitted over the WLAN link needs to be increased or decreased, to instruct the UE to increase or decrease the data stream transmitted over the WLAN link; and
to increase or decrease the data stream transmitted over the WLAN link, in response to the update instruction.

62. The device according to claim 61, wherein the processor configured to receive the update instruction send by the base station to instruct the UE to increase or decrease the data stream transmitted over the WLAN link is configured:
to receive RRC configuration signaling, sent by the base station, carrying the update instruction to instruct the UE to increase or decrease the data stream transmitted over the WLAN link.

63. The device according to claim 62, wherein the processor configured to increase or decrease the data stream transmitted over the WLAN link, in response to the update instruction is configured:
to send an RRC configuration complete message to the base station; and
to increase or decrease the data stream transmitted over the WLAN link, in response to the update instruction.
